# EUROPEAN PATENT SPECIFICATION

(11) **EP 2 076 551 B1**
(45) Date of publication and mention of the grant of the patent: **06.08.2014**
(21) Application number: 06799305.5
(22) Date of filing: 18.10.2006
(51) Int. Cl.: C08F 10/02, C08F 4/659

(54) **ARYLPHENOXY CATALYST SYSTEM FOR PRODUCING ETHYLENE HOMOPOLYMER OR COPOLYMERS OF ETHYLENE AND ALPHA-OLEFINS**
ARYLPHENOXYKATALYSATORSYSTEM ZUR HERSTELLUNG VON ETHYLEN-HOMOPOLYMER ODER COPOLYMEREN VON ETHYLEN UND ALPHA OLEFINEN
SYSTÈME DE CATALYSEUR D'ARYLPHÉNOXY PRODUISANT UN HOMOPOLYMÈRE OU DES COPOLYMÈRES D'ÉTHYLÈNE ET DES ALPHA-OLEFINES

(43) Date of publication of application: 08.07.2009
(73) Proprietor: SK Innovation Co., Ltd., Jongro-gu Seoul 110-110 (KR)
(72) Inventor: WOO, Tae Woo, Seoul 135-774 (KR); OK, Myung Ahn, Daejeon 305-500 (KR); HAHN, Jong Sok, Daejeon 305-761 (KR); LEE, Mal Ou, Daejeon 305-772 (KR); KANG, Sang Ook, Gyeonggi-do 448-130 (KR); KO, Sung Bo, Daejeon 305-762 (KR); KIM, Tae Jin, Seoul 150-044 (KR); KIM, Sung Kwan, Gyeongsangnam-do 666-805 (KR)
(74) Representative: Comoglio, Elena
(86) International application number: PCT/KR2006/004231
(87) International publication number: WO 2008/047957

(56) References cited:
- WO-A1-2007/040294
- KR-B1- 100 639 696
- MADDIPATI, SRIDHAR V. ET AL: "Transition from living to chain growth olefin polymerization by a single-site homogeneous group 4 catalyst in a batch reactor", POLYMER PREPRINTS (AMERICAN CHEMICAL SOCIETY, DIVISION OF POLYMER CHEMISTRY) ( 2004 ), 45(2), 541-542 CODEN: ACPPAY; ISSN: 0032-3934, 2004, XP8156753,
- PHOMPHRAI K ET AL: "Diverse Pathways of Activation and Deactivation of Half-Sandwich Aryloxide Titanium Polymerization Catalysts", ORGANOMETALLICS, ACS, WASHINGTON, DC, US, vol. 25, no. 1, 2 January 2006 (2006-01-02), pages 214-220, XP008109576, ISSN: 0276-7333, DOI: 10.1021/OM0507272 [retrieved on 2005-11-25]
- FENWICK A E ET AL: "Formation of Neutral and Cationic Methyl Derivatives of Titanium Containing Cyclopentadienyl and Aryloxide Ancillary Ligation", ORGANOMETALLICS, ACS, WASHINGTON, DC, US, vol. 23, no. 9, 26 April 2004 (2004-04-26) , pages 2146-2156, XP008109586, ISSN: 0276-7333, DOI: 10.1021/OM0341404 [retrieved on 2004-04-01]
- NIELSON A J ET AL: "Steric influences in cyclopentadienyl-monophenoxide complexes of titanium(iv) arising from ortho-substitution of the phenoxide ligand", POLYHEDRON, PERGAMON PRESS, OXFORD, GB, vol. 25, no. 8, 22 October 2005 (2005-10-22), pages 1729-1736, XP024915957, ISSN: 0277-5387, DOI: 10.1016/J.POLY.2005.11.016 [retrieved on 2006-05-29]
- PHOMPHRAI K. ET AL.: 'Diverse Pathways of Activation and Deactivation of Half-Sandwich Aryloxide Titanium Polymerization Catalysts' ORGANOMETALLICS vol. 25, no. 1, 02 January 2006, pages 214 - 220, XP008109576
- STURLA S.J. ET AL.: 'Monocyclopentadienyltitanium Aryloxide Complexes: Preparation, Characterization, and Application in Cyclization Reactions' ORGANOMETALLICS vol. 21, no. 4, 18 February 2002, pages 739 - 748, XP008109582
- LEE J. ET AL.: 'Ancillary Ligand Control of the Regiochemistry of Coupling of 3,3-Dimethyl-1-butyne at Titanium Metal Centers' ORGANOMETALLICS vol. 22, no. 7, 31 March 2003, pages 1546 - 1549, XP008109585
- NIELSON A.J. ET AL.: 'Steric influences in cyclopentadienyl-monophenoxide complexes of titanium(IV) arising from ortho-substitution of the phenoxide ligand' POLYHEDRON vol. 25, no. 8, 29 May 2006, pages 1729 - 1736, XP024915957
- FENWICK A.E. ET AL.: 'Formation of Neutral and Cationic Methyl Derivatives of Titanium Containing Cyclopentadienyl and Aryloxide Ancillary Ligation' ORGANOMETALLICS vol. 23, no. 9, 26 April 2004, pages 2146 - 2156, XP008109586
- THOM M.G. ET AL.: 'Synthesis, Characterization, and One-Electron Reduction of Mixed-Cyclopentadienyl/Aryloxide Titanium Dichlorides' ORGANOMETALLICS vol. 19, no. 26, 25 December 2000, pages 5636 - 5642, XP008109587

## Description

### [Technical Field]

The present invention relates to an arylphenoxy catalyst system for producing ethylene homopolymer or copolymers of ethylene and α-olefins. More particularly, the present invention pertains to a group 4 transition metal catalyst, a catalyst system which includes the arylphenoxy-based transition metal catalyst and an aluminoxane cocatalyst or a boron compound cocatalyst, and a method of producing an ethylene homopolymer or copolymers of ethylene and α-olefins using the same. In the transition metal catalyst, a cyclopentadiene derivative and an arylphenoxide as fixed ligands are located around a group 4 transition metal, arylphenoxide ligand is substituted with at least one aryl derivative at the ortho position thereof and at least one halogen compound, and the ligands are not crosslinked to each other.

### [Background Art]

Conventionally, Ziegler-Natta catalyst system which comprises a main catalyst component of titanium or vanadium compounds and a cocatalyst component of alkyl aluminum compounds has been used to produce an ethylene homopolymer or copolymers of ethylene and α-olefins. However, the Ziegler-Natta catalyst system is disadvantageous in that, even though it is highly active in the polymerization of ethylene, the molecular weight distribution of a resultant polymer is wide, and particularly, a compositional distribution is non-uniform in the copolymer of ethylene and α-olefin due to heterogeneous catalyst active sites.

Recently, the metallocene catalyst system which comprises a metallocene compound of a group 4 transition metal in the periodic table, such as titanium, zirconium, or hafnium, and methylaluminoxane as a cocatalyst has been developed. Since the metallocene catalyst system is a homogeneous catalyst having one kind of catalytic active site, it can be used to produce polyethylene having a narrow molecular weight distribution and a uniform compositional distribution in comparison with the conventional Ziegler-Natta catalyst system. For example, EP Pat Nos. 320762 and 372632, and Japanese Patent Laid-Open Publication Nos. Sho.63-092621, Hei.02-84405, and Hei.03-2347 disclose metallocene compounds, such as Cp₂TiCl₂, Cp₂ZrCl₂, Cp₂ZrMeCl, Cp₂ZrMe₂, or (ethylene-bis tetrahydroindenyl)ZrCl₂, activated with methylaluminoxane as a cocatalyst to polymerize ethylene at high catalytic activity, thereby making it possible to produce polyethylene having a molecular weight distribution (Mw/Mn) of 1.5 - 2.0. However, it is difficult to produce a polymer having a high molecular weight using the above catalyst system. Particularly, if it is applied to a solution polymerization process which is conducted at high temperatures of 140 °C or higher, polymerization activity is rapidly reduced and a β -hydrogen elimination reaction is dominant, thus it is unsuitable for producing a high molecular weight polymer having a weight average molecular weight (Mw) of 100,000 or more.

Maddipati, Sridhar V. et al., Polymer preprints (American Chemical Society, Division of Polymer Chemistry, 2004, 45(2), 541-542 and Phomphrai K. et al., Organometallics, ACS, Washington D.C., U.S., Vol. 25, No. 1, 2 January 2006, pag. 214-220, disclose complexes such as CpTi(Me)₂O-PhPh₄.

Meanwhile, a constrained geometry non-metallocene catalyst (a so-called single-site catalyst) in which a transition metal is connected to a ligand system in a ring shape has been suggested as a catalyst which has high catalytic activity and is capable of producing a polymer having a high molecular weight in polymerization of only ethylene or in copolymerization of ethylene and α-olefin under a solution polymerization condition. EP Pat. Nos. 0416815 and 0420436 suggest a catalytic system in which a transition metal is connected to cyclopentadiene ligand and an amide group in a ring shape, and EP Pat. No. 0842939 discloses a catalyst in which a phenol-based ligand as an electron donor compound is connected with a cyclopentadiene ligand in a ring shape. However, since the cyclization of the ligands along with the transition metal compound is achieved at very low yield during synthesis of the constrained geometry catalyst, it is difficult to commercialize them.

Meanwhile, an example of non-metallocene catalysts which is not a constrained geometry catalyst and is capable of being used under a high temperature solution condition is disclosed in US Pat. No. 6,329,478 and Korean Patent Laid-Open Publication No. 2001-0074722. The patents disclose a single-site catalyst using one or more phosphinimine compounds as a ligand, having high ethylene conversion during copolymerization of ethylene and α-olefins under the high temperature solution polymerization condition at 140 °C or higher. However, a limited range of phosphine compounds may be used to produce the phosphinimine ligand, and, since these compounds are harmful to the environment and to humans, it might have some difficulties in using them to produce general-purpose olefin polymers. US Pat. No. 5,079,205 discloses a catalyst having a bis-phenoxide ligand, but it has too low catalytic acitivity to be commercially used.

In addition to the above-mentioned examples, ┌Organometallics 1998, 17, 2152 (Nomura *et al*.)┘ discloses the synthesis of a non-metallocene catalyst with a phenol-based ligand and polymerization using the same, in which the substituents on the phenol ligand are limited to only simple alkyl substituents such as isopropyl group. On the other hand, ┌J. Organomet. Chem. 1999, 591, 148 (Rothwell, P. *et al*.)┘ discloses an arylphenoxy ligand, but does not suggest the effects of aryl substituent at the ortho-position.

### [Disclosure]

### [Technical Problem]

To accomplish the above problems occurring in the prior art, the present inventors have conducted extensive studies, resulting in the finding that a non-bridged type transition metal catalyst, in which cyclopentadiene derivatives and arylphenoxide are used as fixed ligands, wherein said arylphenoxide is substituted with at least one aryl derivative at the ortho-position thereof and has at least one halogen compound as substitute group, shows an excellent thermal stability. Based on the above finding, a catalyst, which is used to produce an ethylene homopolymer or copolymers of ethylene and α-olefins having a high molecular weight, at a high activity during a solution polymerization process at high temperatures of 120 °C or higher, has been developed, thereby the present invention is accomplished.

Accordingly, an object of the present invention is to provide a single-site catalyst suitable for high temperature solution polymerization, having single active site leading to a polymer having constant a molecular weight distribution and high molecular weight.

Another object of the present invention is to provide a catalyst system containing a single-site catalyst and co-catalyst used thereof.

Still another object of the present invention is to provide solution polymerization method, which is possible to easily and commercially produce an ethylene homopolymer or copolymers of ethylene and α-olefins having various physical properties using the catalyst.

### [Technical Solution]

In order to accomplish the above object, an aspect of the present invention provides an arylphenoxy-based transition metal catalyst expressed by Formula 1, which includes a cyclopentadiene derivative and arylphenoxide as fixed ligands around a transition metal. Arylphenoxide is substituted with at least one aryl derivative at the ortho position thereof and at least one halogen compound, and the ligands are not crosslinked to each other: 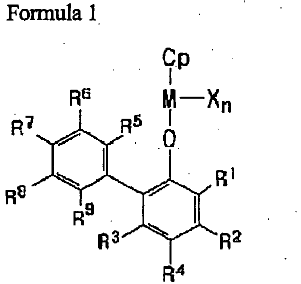 wherein M is the group 4 transition metal of a periodic table;
Cp is cyclopentadienyl group, capable of forming an η⁵-bond along with the central metal, or a derivative thereof;
at least one of substituent R¹, R², R³, R⁴, R⁵, R⁶, R⁷, R⁸ and R⁹ of the arylphenoxide ligand is a halogen atom or a C1-C20 linear or nonlinear alkyl group substituted with at least one halogen atom, and the substituents of the arylphenoxide ligand other than the halogen-containing substituent are independently hydrogen atom, a C1-C20 linear or nonlinear alkyl group, a silyl group which contains the C1-C20 linear or nonlinear alkyl group, a C7-C30 arylalkyl group, an alkoxy group which contains the C1-C20 alkyl group, or a C3-C20. alkyl-substituted or C6-C20 aryl-substituted siloxy group, an amido group or a phosphido group which has the C1-C20 hydrocarbon group, or a C1-C20 alkyl-substituted mercapto or nitro group, optionally with the proviso that the substituent groups may be arbitrarily bonded to form rings;
X is selected from or two or more independently selected from a group consisting of the halogen atom, the C1-C20 alkyl group which is not a Cp derivative, the C7-C30 arylalkyl group, an alkoxy group which contains the C1-C20 alkyl group, the C3-C20 alkyl-substituted siloxy group, and an amido group which contains a C 1-C20 hydrocarbon group; and
n is 1 or 2 depending on the oxidation state of the transition metal.

Another aspect of the present invention relates to a catalyst system which comprises the transition metal catalyst, and aluminum or a boron compound as a cocatalyst.

Still another aspect of the present invention relates to a method of producing ethylene polymers using the transition metal catalyst.

### [Advantageous Effects]

The arylphenoxy catalyst system according to the present invention is advantageous in that it is easy to handle, it is possible to produce it using environmentally-friendly raw materials at high yield, and it has a high catalytic activity in a high temperature solution polymerization performing at the range of 120 ~ 250 °C temperature condition due to its excellent thermal stability in the course of producing a polymer having a high molecular weight, thus it is more useful than a conventional metallocene or non-metallocene catalysts. Therefore, it is useful for producing an ethylene homopolymer or copolymers of ethylene and α-olefins having various physical properties.

### [Description of Drawings]

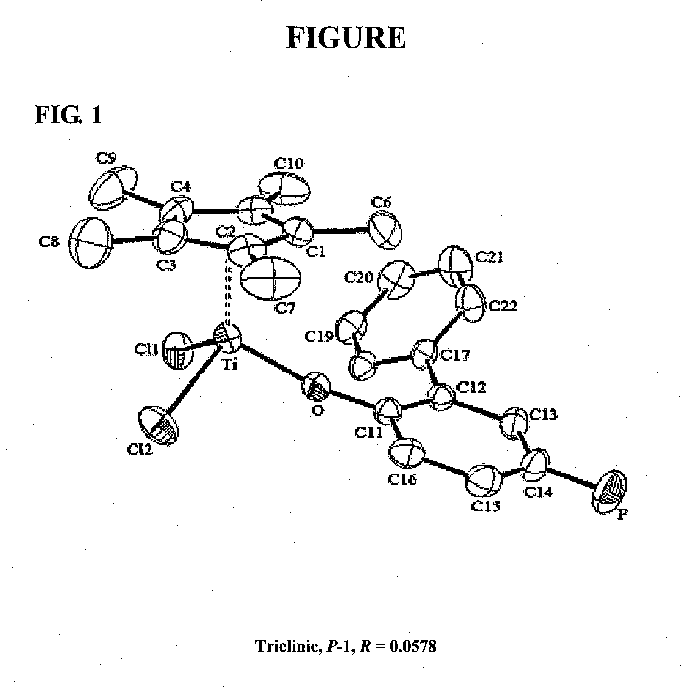

FIG. 1 illustrates a crystalline structure of a (dichloro) (pentamethylcyclo pentadienyl)(2-phenyl-4-fluoro-2-phenylphenoxy) titanium(IV) catalyst according to the present invention.

### [Best Mode]

Hereinafter, a detailed description will be given of the present invention.

In order to accomplish the above object, an aspect of the present invention pertains to an arylphenoxy-based transition metal catalyst expressed by Formula 1, which has stability for high temperature solution polymerization with temperature condition of 120 - 250°C, and includes a cyclopentadiene derivative and arylphenoxide as fixed ligands around a transition metal. Said arylpherioxide is substituted with at least one aryl derivative at the ortho position thereof and at least one halogen compound, and the ligands are not crosslinked to each other: 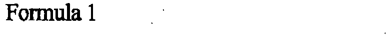 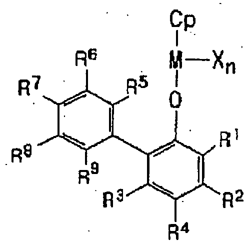 wherein M is the group 4 transition metal of a periodic table;
Cp is cyclopentadienyl group, capable of forming an η⁵-bond along with the central metal, or a derivative thereof;
at least one of substituent R¹, R², R³, R⁴, R⁵, R⁶, R⁷, R⁸ and R⁹ of the arylphenoxide ligand is that is, a halogen atom or a C1-C20 linear or nonlinear alkyl group substituted with at least one halogen atom and the substituents of the arylphenoxide ligand other than the halogen containing substituent are independently hydrogen atom, a C1-C20 linear or nonlinear alkyl group, a silyl group which contains the C1-C20 linear or nonlinear alkyl group, a C7-C30 arylalkyl group, an alkoxy group which contains the C1-C20 alkyl group, or a C3-C20 alkyl-substituted or C6-C20 aryl-substituted siloxy group, an amido group or a phosphido group which has the C1-C20 hydrocarbon group, or a C1-C20 alkyl-substituted mercapto or nitro group, optionally with the proviso that the substituent groups may be arbitrarily bonded to form rings;
X is selected from or two or more independently selected from a group consisting of the halogen atom, the C1-C20 alkyl group which is not a Cp derivative, the C7-C30 arylalkyl group, an alkoxy group which contains the C1-C20 alkyl group, the C3-C20 alkyl-substituted siloxy gmup, and an amido group which contains a C1-C20 hydrocarbon group; and
n is 1 or 2 depending on the oxidation state of the transition metal.

Another aspect of the present invention relates to a catalyst system which comprises the transition metal catalyst, and aluminum or a boron compound as a cocatalyst.

Still another aspect of the present invention relates to a method of producing ethylene polymers using the transition metal catalyst.

Hereinafter, more detailed description will be given of the present invention.

M of the transition metal catalyst in Formula 1 is preferably titanium, zirconium, or hafnium. Furthermore, Cp is a cyclopentadiene anion capable of forming an η⁵-bond along with a central metal, or a derivative thereof. In detail, it is exemplified by cyclopentadienyl, methylcyclopentadienyl, dimethylcyclopentadienyl, tetramethylcyclopentadienyl, pentamethylcyclopentadienyl, butylcyclopentadienyl, sec-butylcyclopentadienyl, tert-butylmethylcyclopentadienyl, trimethylsilylcyclopentadienyl, indenyl, methylindenyl, dimethylindenyl, ethylindenyl, isopropylindenyl, fluorenyl, methylfluorenyl, dimethylfluorenyl, ethylfluorenyl, and isopropylfluorenyl.

With respect to R¹, R², R³, R⁴, R⁵, R⁶, R⁷, R⁸ and R⁹ of an arylphenoxide ligand, at least one halogen atom is selected, such as fluorine, chlorine, bromine, and iodine atoms; In detail, explanation regarding the substituents which can be optionally halogen compound set forth as follow: a C1-C20 alkyl group is exemplified by methyl group, ethyl group, n-propyl group, isopropyl group, n-butyl group, sec-butyl group, tert-butyl group, n-pentyl group, neopentyl group, amyl group, n-hexyl group, n-octyl group, n-decyl group, n-dodecyl group, n-pentadecyl group, and n-eicosyl group, and preferably, methyl group, ethyl group, isopropyl group, tert-butyl group, and amyl group. The alkyl group may arbitrarily be substituted with one or more halogen atoms, and is exemplified by fluoromethyl group, difluoromethyl group, trifluoromethyl group, chloromethyl group, dichloromethyl group, trichloromethyl group, bromomethyl group, dibromomethyl group, tribromomethyl group, iodomethyl group, diiodomethyl group, triiodomethyl group, fluoroethyl group, difluoroethyl group, trifluoroethyl group, tetrafluoroethyl group, pentafluoroethyl group, chloroethyl group, dichloroethyl group, trichloroethyl group, tetrachloroethyl group, pentachloroethyl group, bromoethyl group, dibromoethyl group, tribromoethyl group, tetrabromoethyl group, pentabromoethyl group, perfluoropropyl group, perfluorobutyl group, perffuoropentyl group, perfluorohexyl group, perfluorooctyl group, perfluorododecyl group, perfluoropentadecyl group, perfluoroeicosyl group, perchloropropyl group, perchlorobutyl group, perchloropentyl group, perchlorohexyl group, perchlorooctyl group, perchlorododecyl group, perchloropentadecyl group, perchloroeicosyl group, perbromopropyl group, perbromobutyl group, perbromopentyl group, perbromohexyl group, perbromooctyl group, perbromododecyl group, perbromopentadecyl group, or perbromoeicosyl group. Among them, trifluoromethyl group is preferable. A C7-C30 arylalkyl group is exemplified by benzyl group, (2-methylphenyl)methyl group, (3-methylphenyl)methyl group, (4-methylphenyl)methyl group, (2,3-dimethylphenyl)methyl group, (2,4-dimethylphenyl)methyl group, (2,5-dimethylphenyl)methyl group, (2,6-dimethylphenyl)methyl group, (3,4-dimethylphenyl)methyl group, (4,6-dimethylphenyl)methyl group, (2,3,4-trimethylphenyl)methyl group, (2,3,5-trimethylphenyl)methyl group, (2,3,6-trimethylphenyl)methyl group, (3,4,5-trimethylphenyl)methyl group, (2,4,6-trimethylphenyl)methyl group, (2,3,4,5-tetramethylphenyl)methyl goup, (2,3,4,6-tetramethylphenyl)methyl group, (2,3,5,6-tetramethylphenyl)methyl group, (pentamethylphenyl)methyl group, (ethylphenyl)methyl group, (n-propylphenyl)methyl group, (isopropylphenyl)methyl group, (n-butylphenyl)methyl group, (sec-butylphenyl)methyl group, (tert-butylphenyl)methyl group, (n-pentylphenyl)methyl group, (neopentylphenyl)methyl group, (n-hexylphenyl)methyl group, (n-octylphenyl)methyl group, (n-decylphenyl)methyl group, (n-dodecylphenyl)methyl group, (n-tetradecylphenyl)methyl group, naphthylmethyl group, or anthracenylmethyl group, and preferably, benzyl group. A C1-C20 alkoxy group is exemplified by methoxy group, ethoxy group, n-propoxy group, isopropoxy group, n-butoxy group, sec-butoxy group, tert-butoxy group, n-pentoxy group, neopentoxy group, n-hexoxy group, n-octoxy group, n-dodecoxy group, n-pentadecoxy goup, or n-eicosoxy group, and preferably, methoxy group, ethoxy group, isopropoxy group, and tert-butoxy group. A C3-C20 alkyl-substituted or C6-C20 aryl-substituted siloxy group is exemplified by trimethylsiloxy group, triethylsiloxy group, tri-n-propylsiloxy group, triisopropylsiloxy group, tri-n-butylsiloxy group, tri-sec-butylsiloxy group, tri-tert-butylsiloxy group, tri-isobutylsiloxy group, tert-butyldimethylsiloxy group, tri-n-pentylsiloxy group, tri-n-hexylsiloxy group, tricyclohexylsiloxy group, or triphenylsiloxy group, and preferably, trimethylsiloxy group, tert-butyldimethylsiloxy group, and triphenylsiloxy group. The above-mentioned substituent groups may be arbitrarily substituted with one or more halogen atoms.

Additionally, an amido group or a phosphido group having a C1-C20 hydrocarbon group is exemplified by dimethylamino group, diethylamino group, di-n-propylamino group, diisopropylamino group, di-n-butylamino group, di-sec-butylamino group, di-tert-butylamino group, diisobutylamino group, tert-butylisopropylamino group, di-n-hexylamino group, di-n-octylamino group, di-n-decylamino group, diphenylamino group, dibenzylamide group, methylethylamide group, methylphenylamide group, benzylhexylamide group, bistrimethylsilylamino group, or bis-tert-butyldimethylsilylamino group, or phosphido group which is substituted with the same alkyl. Among them, dimethylamino group, diethylamino group, and diphenylamide group are preferable. A C1-C20 mercapto group is exemplified by methyl mercaptan, ethyl mercaptan, propyl mercaptan, isopropyl mercaptan, 1-butyl mercaptan, or isopentyl mercaptan, and preferably, ethyl mercaptan and isopropyl mercaptan.

In X, a halogen atom is exemplified by fluorine, chlorine, bromine, and iodine atoms and a C1-C20 alkyl group which is not the Cp derivative is exemplified by methyl group, ethyl group, n-propyl group, isopropyl group, n-butyl group, sec-butyl group, tert-butyl group, n-pentyl goup, neopentyl group, amyl group, n-hexyl group, n-octyl group, n-decyl group, n-dodecyl group, n-pentadecyl group, and n-eicosyl group, and preferably, methyl group, ethyl group, isopropyl group, tert-butyl group, and amyl group. A C7-C30 arylalkyl group is exemplified by benzyl group, (2-methylphenyl)methyl group, (3-methylphenyl)methyl group, (4-methylphenyl)methyl group, (2,3-dimethylphenyl)methyl group, (2,4-dimethylphenyl)methyl group, (2,5-dimethylphenyl)methyl group, (2,6-dimethylphenyl)methyl group, (3,4-dimethylphenyl)methyl group, (4,6-dimethylphenyl)methyl group, (2,3,4-trimethylphenyl)methyl group, (2,3,5-trimethylphenyl)methyl group, (2,3,6-trimethylphenyl)methyl group, (3,4,5-trimethylphenyl)methyl group, (2,4,6-trimethylphenyl)methyl group, (2,3,4,5-tetramethylphenyl)methyl group, (2,3,4,6-tetramethylphenyl)methyl group, (2,3,5,6-tetramethylphenyl)methyl group, (pentamethylphenyl)methyl group, (ethylphenyl)methyl group, (n-propylphenyl)methyl group, (isopropylphenyl)methyl group, (n-butylphenyl)methyl group, (sec-butylphenyl)methyl group, (tert-butylphenyl)methyl group, (n-pentylphenyl)methyl group, (neopentylphenyl)methyl group, (n-hexylphenyl)methyl group, (n-octylphenyl)methyl group, (n-decylphenyl)methyl group, (n-dodecylphenyl)methyl group, (n-tetradecylphenyl)methyl group, naphthylmethyl group, or anthracenylmethyl group, and preferably, benzyl group. A C1-C20 alkoxy group is exemplified by methoxy group, ethoxy group, n-propoxy group, isopropoxy group, n-butoxy group, sec-butoxy group, tert-butoxy group, n-pentoxy group, neopentoxy group, n-hexoxy group, n-octoxy group, n-dodecoxy group, n-pentadecoxy group, or n-eicosoxy group, and preferably, methoxy group, ethoxy group, isopropoxy group, and tert-butoxy group. A C3-C20 alkyl-substituted siloxy group is exemplified by trimethylsiloxy group, triethylsiloxy group, tri-n-propylsiloxy group, triisopropylsiloxy group, tri-n-butylsiloxy group, tri-sec-butylsiloxy group, tri-tert-butylsiloxy group, tri-isobutylsiloxy group, tert-butyldimethylsiloxy group, tri-n-pentylsiloxy group, tri-n-hexylsiloxy group, or tricyclohexylsiloxy group, and preferably, trimethylsiloxy group and tert-butyldimethylsiloxy group.

An amido group or a phosphido group having a C1-C20 hydrocarbon group is exemplified by dimethylamino group, diethylamino group, di-n-propylamino group, diisopropylamino group, di-n-butylamino group, di-sec-butylamino group, di-tert-butylamino group, diisobutylamino group, tert-butylisopropylamino group, di-n-hexylamino group, di-n-octylamino group, di-n-decylamino group, diphenylamino group, dibenzylamide group, methylethylamide group, methylphenylamide group, benzylhexylamide group, bistrimethylsilylamino group, or bis-tert-butyldimethylsilylamino group, or phosphido group which is substituted with the same alkyl. Among them, dimethylamino group, diethylamino group, and diphenylamide group are preferable.

In a representative process of synthesizing the transition metal complex of Formula 1, a substituted or unsubstituted arylphenoxide-based ligand is produced and reacted with a 4^{th} transition metal compound having one cyclopentadiene derivative. To produce a substituted or unsubstituted arylphenol-based ligand, an anisole compound, which is expressed by Formula 2 and substituted with one or two halogen atoms, and a substituted or unsubstituted arylboronic acid, which is as shown in Formula 3, are reacted with an organic phosphine ligand using a palladium metal compound as a catalyst in an organic solvent at preferably -20 to 120 °C to produce an aryl-substituted anisole compound, and reacted with a tribromoboron compound in an organic solvent at a temperature preferably ranging from -78 to 50 °C, to produce an aryl-substituted phenoxide ligand. The ligand thus produced is reacted with sodium hydride, alkyl lithium, or alkyl magnesium halide compound in an organic solvent at a temperature preferably ranging from -78 to 120°C so as to be converted into anions, and then subjected to a ligand exchange reaction along with the 4^{th} transition metal compound which is expressed by Formula 4 and has one cyclopentadiene derivative at -20 to 120°C in an equivalent ratio. The resulting product is purified to produce an arylphenoxide-based transition metal catalyst component.

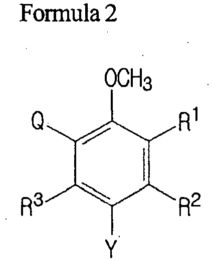

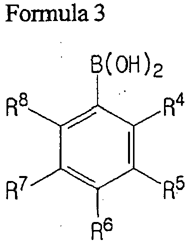

In the above Formula 2 or 3, R¹, R², R³, R⁴, R⁵, R⁶, R⁷, and R⁸ are independently a hydrogen atom, a halogen atom, a C1-C20 linear or nonlinear alkyl group arbitrarily substituted with one or more halogen atoms, a silyl group which contains the C1-C20 linear or nonlinear alkyl group arbitrarily substituted with one or more halogen atoms, a C6-C30 aryl group arbitrarily substituted with one or more halogen atoms, a C7-C30 arylalkyl group arbitrarily substituted with one or more halogen atoms, a C1-C20 alkylalkoxy group arbitrarily substituted with one or more halogen atoms, or a C3-C20 alkyl-substituted siloxy group or C6-C20 aryl-substituted siloxy group, optionally with the proviso that the substituent groups may be arbitrarily bonded to form rings; Q is the halogen atom; and Y is the hydrogen atom, the halogen atom, the C1-C20 linear or nonlinear alkyl group arbitrarily substituted with one or more halogen atoms, the silyl group which contains the C1-C20 linear or nonlinear alkyl group arbitrarily substituted with one or more halogen atoms, the C6-C30 aryl group arbitrarily substituted with one or more halogen atoms, the C7-C30 arylalkyl group arbitrarily substituted with one or more halogen atoms, the C1-C20 alkylalkoxy group arbitrarily substituted with one or more halogen atoms, the C3-C20 alkyl-substituted siloxy group or C6-C20 aryl-substituted siloxy group, the amido group or a phosphido group which has the C1-C20 hydrocarbon group, or a C1-C20 alkyl-substituted mercapto or nitro group.

Formula 4 CpM(X)ₘ

In Formula 4, Cp is cyclopentadienyl capable of forming an η⁵-bond along with a central metal, or a derivative thereof, M is a group 4 transition metal in a periodic table, X is a halogen atom, a C1-C20 alkyl group which is not a Cp derivative, a C7-C30 arylalkyl group, a C1-C20 alkylalkoxy group, a C3-C20 alkyl-substituted siloxy group, or an amido group having a C1-C20 hydrocarbon group, and m is 2 or 3 depending on the oxidation value of the transition metal.

Meanwhile, in order to use the transition metal catalyst of Formula 1 as an active catalyst component which is used to produce an ethylene homopolymer or copolymer of ethylene and an α-olefin comonomers, an X ligand is extracted from a transition metal complex to convert the central metal into cations, and aluminoxane compounds or boron compounds which are capable of acting as opposite ions having weak bonding strength, that is, anions, are used along with a cocatalyst.

As well known in the art, aluminoxane, which is expressed by the following Formula 5 or 6, is frequently used as the aluminoxane compound used in the present invention.

Formula 5 (-Al(R⁹)-O-)ₘ

Formula 6 (R⁹)Al-(-O(R⁹-)ₚ-(R⁹)₂

In the above Formulae, R⁹ is a C1-C20 alkyl group, and preferably, a methyl group or an isobutyl group, and m and p are integers ranging from 5 to 20.

In order to use the transition metal catalyst of the present invention as an active catalyst, the mixing ratio of the two components is set so that the molar ratio of the central metal to aluminum is preferably 1:20 to 1:10,000, and more preferably, 1:50 to 1:5,000.

Furthermore, a boron compound which is capable of being used as a cocatalyst of the present invention may be selected from compounds of the following Formulae 7 to 9 as disclosed in US Patent No. 5,198,401.

Formula 7 B(R¹⁰)₃

Formula 8 [R¹¹]⁺[B(R¹⁰)₄]⁻

Formula 9 [(R¹²)_{q}ZH]⁺[B(R¹⁰)₄]⁻

In the above Formulae, B is a boron atom; R¹⁰ is an unsubstituted phenyl group, or a phenyl group which is substituted with 3 to 5 substituent groups selected from the group consisting of a C1-C4 alkyl group which is substituted or unsubstituted with a fluorine atom and a C1-C4 alkoxy group which is substituted or unsubstituted with the fluorine atom; R¹¹ is a C5-C7 cyclic aromatic cation or an alkyl-substituted aromatic cation, for example, triphenylmethyl cation; Z is a nitrogen atom or a phosphorus atom; R¹² is a C1-C4 alkyl radical or an anilinium radical which is substituted with two C1-C4 alkyl groups along with a nitrogen atom; and q is an integer of 2 or 3.

Examples of the boron-based cocatalyst include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, phenylbis(pentafluorophenyl)borane, tetrakis(pentafluorophenyl)borate, tetrakis(2,3,5,6-tetrafluorophenyl)borate, tetrakis(2,3,4,5-tetrafluorophenyl)borate, tetrakis(3,4,5-tetrafluorophenyl)borate, tetrakis(2,2,4-trifluorophenyl)borate, phenylbis(pentafluorophenyl)borate, and tetrakis(3,5-bistrifluoromethylphenyl)borate. Furthermore, a combination of the above-mentioned examples is exemplified by ferrocenium tetrakis(pentafluorophenyl)borate, 1,1'-dimethylferrocenium tetrakis(pentafluorophenyl)borate, silver tetrakis(pentafluorophenyl)borate, triphenylmethyl tetrakis(pentafluorophenyl)borate, triphenylmethyl tetrakis(3,5-bistrifluoromethylphenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(n-butyl)ammonium tetrakis(3,5-bistrifluoromethylphenyl)borate, N,N-dimethylanilinium tetrakis(pentafluorophenyl)borate, N,N-diethylanilinium tetrakis(pentafluorophenyl)borate, N,N-2,4,6-pentamethylanilinium tetrakis(pentafluorophenyl)borate, N,N-dimethylanilinium tetrakis(3,5-bistrifluoromethylphenyl)borate, diisopropylammonium tetrakis(pentafluorophenyl)borate, dicyclohexylammonium tetrakis(pentafluorophenyl)borate, triphenylphosphonium tetrakis(pentafluorophenyl)borate, tri(methylphenyl)phosphonium tetrakis(pentafluorophenyl)borate, or tri(dimethylphenyl)phosphonium tetrakis(pentafluorophenyl)borate, and preferably, N,N-dimethylanilinium tetrakis(pentafluorophenyl)borate, triphenylmethylinium tetrakis(pentafluorophenyl)borate, and tris(pentafluoro)borane.

In a catalyst system using the boron-based cocatalyst, the molar ratio of the central metal to the boron atom is preferably 1:0.01 - 1:100, and more preferably, 1:0.5 - 1:5.

Meanwhile, a mixture of the boron compound and the organic aluminum compound or a mixture of the boron compound and the aluminoxane compound may be used, if necessary. In connection with this, the aluminum compound is used to remove polar compounds acting as a catalytic poison from a reaction solvent, and may act as an alkylating agent if X of the catalyst components is halogen.

The organic aluminum compound is expressed by the following Formula 10.

Formula 10 (R¹³)ᵣAl(E)₃₋ᵣ

In the above Formula, R¹³ is a C1-C8 alkyl group, E is a hydrogen atom or a halogen atom, and r is an integer ranging from 1 to 3.

The organic aluminum compound is exemplified by trialkylaluminum including trimethylaluminum, triethylaluminum, tripropylaluminum, triisobutylaluminum, and trihexylaluminum; dialkylaluminum chloride including dimethylaluminum chloride, diethylaluminum chloride, dipropylaluminum chloride, diisobutylaluminum chloride, and dihexylaluminum chloride; alkylaluminum dichloride including methylaluminum dichloride, ethylaluminum dichloride, propylaluminum dichloride, isobutylaluminum dichloride, and hexylaluminum dichloride; or dialkylaluminum hydride including dimethylaluminum hydride, diethylaluminum hydride, dipropylaluminum hydride, diisobutylaluminum hydride, and dihexylaluminum hydride. Trialkylaluminum is preferable, and triethylaluminum and triisobutylaluminum are more preferable.

In connection with this, the molar ratio of the central metal : the boron atom : the aluminum atom is preferably 1 : 0.1 - 100 : 10 - 1000, and more preferably, 1 : 0.5 - 5 : 25 - 500.

According to another aspect of the present invention, in a method of producing ethylene polymers using the transition metal catalyst system, the transition metal catalyst, the cocatalyst, and ethylene or a vinyl-based comonomer come into contact with each other in the presence of a predetermined organic solvent. At this stage, the transition metal catalyst and the cocatalyst are separately loaded into a reactor, or loaded into the reactor after they are previously mixed with each other. There are no limits to mixing conditions, such as the order of addition, temperature, or concentration.

The organic solvent useful in the method is C3-C20 hydrocarbons, and is exemplified by butane, isobutane, pentane, hexane, heptane, octane, isooctane, nonane, decane, dodecane, cyclohexane, methylcyclohexane, benzene, toluene, or xylene.

In detail, when the ethylene homopolymer, that is, high density polyethylene (HDPE), is produced, ethylene is used alone as a monomer, and pressure of ethylene useful to the present invention is 101.325 kPa to 101.325 MPa (100 atm), and preferably, 1013.25 kPa to 15.19875 MPa (0 - 150 atm). Furthermore, a polymerization temperature is 80 - 300°C, and preferably, 120 - 250°C.

Generally, when a solution polymerization performs at such a high temperature, it was used to be difficult to obtain polymers having desirable property due to lowered reaction activity resulting from deformation or deterioration of catalyst in proportion as raising temperature. However, since the transition metal catalyst of present invention has a stability at the range of 120 - 250°C as mentioned above, not leading to lowering catalyst activity, instead it shows a stable catalyst activity at 140 - 220°C preferably. Aforementioned catalyst activity may result in, for example, obtaining stable yield of polymer using high temperature solution polymerization as can be seen in below examples.

Additionally, when the copolymers of ethylene and α-olefins are produced, C3-C18 α-olefins are used as comonomers along with ethylene, and are selected from the group consisting of propylene, 1-butene, 1-pentene, 4-methyl-1-pentene, 1-hexene, 1-octene, 1-decene, 1-dodecene, 1-hexadecene, and 1-octadecene. More preferably, 1-butene, 1-hexene, 1-octene, or 1-decene is copolymerized with ethylene. In connection with this, the pressure of ethylene and the polymerization temperature are preferably the same as in the method of producing high density polyethylene. The ethylene copolymers produced according to the present invention include 60 wt% or more ethylene, and preferably, 75 wt% ethylene. As described above, linear low density polyethylene (LLDPE) which is produced using C4-C10 α-olefin as the comonomer has a density of 910 - 940 kg/m³, and, in connection with this, it is possible to produce very or ultra low density polyethylene (VLDPE or ULDPE) having a density of 910 kg/m³ or less. As well, in the course of producing the ethylene homopolymer or copolymers according to the present invention, hydrogen may be used as a molecular weight controlling agent to control a molecular weight, and the ethylene homopolymer or copolymers typically has weight average molecular weight (Mw) of 80,000 - 500,000.

Since the catalyst system of the present invention is homogeneous in a polymerization reactor, it is preferable for application to a solution polymerization process which is conducted at a temperature of a melting point or higher of the polymer to be produced. However, as disclosed in US Patent No. 4,752,597, the transition metal catalyst and the cocatalyst may be supported by a porous metal oxide supporter so as to be used in a slurry polymerization process or a gaseous polymerization process as a heterogeneous catalyst system.

### [Mode for Invention]

A better understanding of the present invention may be obtained through the following examples which are set forth to illustrate, but are not to be construed as the limit of the present invention.

Syntheses of all ligands and catalysts were conducted using a standard Schlenk or globe box technique in nitrogen atmosphere if not specifically described otherwise. The organic solvents used in the reactions were refluxed in the presence of sodium metal and benzophenone to remove moisture, and distilled immediately before they were used. ¹H-NMR analyses of the produced ligands and catalysts were carried out at normal temperature using Varian Oxford 300 MHz.

n-Heptane as a polymerization solvent was passed through a column in which a molecular sieve 5A and activated alumina were packed, and bubbling was conducted using highly pure nitrogen to sufficiently remove moisture, oxygen, and other catalytic poison materials before it was used. The resulting polymers were analyzed using the following methods.

### 1. Melt index (MI)

Measurement was conducted based on ASTM D 2839.

### 2. Density

Measurement was conducted using a density gradient column based on ASTM D 1505.

### 3. Analysis of a melting point (Tₘ)

Measurement was conducted using Dupont DSC2910 in a nitrogen atmosphere at a rate of 10 °C/min under a 2^{nd} heating condition.

### 4. Molecular weight and molecular weight distribution

Measurement was conducted using PL210 GPC which was equipped with PL Mixed-BX2+preCol in a 1,2,3-trichlorobenzene solvent at 135°C and a rate of 1.0 mL/min, and the molecular weight was revised using a PL polystyrene standard material.

### 5. α-olefin content of copolymer (wt%)

Measurement was conducted using a Bruker DRX500 nuclear magnetic resonance spectroscope at 125 MHz in a mixed solvent of 1,2,4-trichlorobenzene/C₆D₆ (7/3 weight fraction) at 120°C in a ¹³C-NMR mode (Bibliography: Randal, J. C. JMS-Rev. Macromol. Chem. Phys. 1980, C29, 201).

### EXAMPLE 1

### Synthesis of 2-phenyl-4-fluorophenol

After adding 2-bromo-4-fluorophenol(4.16g, 20.32 mmol, Aldrich) into a flask, nitrogen flow is allowed into the flask. Then, palladium acetate(0.22g, 1.02mmol), potasium phosphate(21.00g, 91.19 mmol), phenylboronic acid(2.97g, 24.36mmol), triphenylphosphine(0.80g, 3.06mmol) were added into the flask. Dimethoxyethane(32ml) and distilled water(8ml) were added thereto and stirred thoroughly. The mixture was heated to 50°C and stirred for 6 hours. When the reaction is over, the mixture was allowed to cool at a room temperature, and then the organic layer was separated from the mixture by using diethylether (10ml×3) and water. After adding magnesium sulfate to the separated organic layer, it was stirred for 30 minutes. The mixture was filtered and volatile materials of the mixture were then removed. The residue was added in a dried flask and dissolved in methylenechloride. After decreasing the temperature up to -78°C, boron tribromide (30.48ml of 1.0M solution in methylenechloride, Aldrich) was slowly dropped thereon. When the dropped boron tribromide settled down, it was then allowed to react for 1 hour, and the temperature of the mixture was raised at a room temperature, and then stirred for 12 hours. An organic layer was separated from the obtained product by using diethylether (10mlx3) and water, and then the organic layer was stirred for 30 minutes with added magnesium sulfate. After filtration, the volatile materials were removed, and then the resulting product was purified through a chromatography column packed with silica gel using hexane and methylchloride (1.5:1) as mobile phase. Then, after removing the volatiles, 3.76g of white solid was obtained.

Yield: 98 %, ¹H-NMR (CDCl₃) δ= 5.04 (s, 1H), 6.92~7.52 (m, 8H)

### Synthesis of (dichloro)(pentamethylcyclopentadienyl)(2-phenyl-4-fluorophenoxy) titanium(IV)

The 2-phenyl-4-fluorophenol of 0.95g(5.07mmol) was dissolved in 40mL of diethylether, followed by slowly dropping 2.4mL of n-butyllithium (1.6M solution in hexanes, Aldrich) at 0°C. After the reaction proceeds for 5 hours at room temperature, a trichloro (pentamethylcyclopentadienyl)titanium(IV)(1.64g, 5.5mmol) solution in 10 mL of diethylether was slowly dropped into the flask at - 78°C. Stirring for 5 hours at room temperature, followed by filtering and removing volatile materials, the recrystallization was conducted using a mixed solution of toluene/hexane at -35 °C to obtained 1.86g of red solid component.

Yield: 83 %, ¹H-NMR (C₆D₆) δ= 1.65(s, 15H), 6.63~7.47 (m, 8H)

### EXAMPLE 2

### Synthesis of 2-(4-trifluoromethyphenyl)phenol

After adding 4-trifluoromethylbromobenzene(4.57g, 20.32 mmol, Aldrich) into a flask, nitrogen flow is allowed into the flask. Then, palladium acetate(0.22g, 1.02mmol), potasium phosphate(21.00g, 91.19 mmol), 2-methoxyboronic acid(3.71g, 20.32mmol, Aldrich), triphenylphosphine(0.80g, 3.06mmol) were put together in the flask. Dimethoxyethane (32ml) and distilled water (8ml) were added thereto and stirred thoroughly. The mixture was heated to 50°C and stirred for 6 hours. When the reaction is over, the mixture was allowed to cool to room temperature, and then the organic layer was separated from the mixture by using diethylether (10mlx3) and water. After adding magnesium sulfate to the separated organic layer, it was stirred for 30 minutes. The mixture was filtered and volatile materials of the mixture were then removed. The residue was added in a dried flask and was dissolved in methylenechloride. After decreasing the temperature up to -78°C, boron tribromide (30.48ml, 1.0M in methylene chloride, Aldrich) was slowly dropped thereon. When the dropped boron tribromide settled down, it was then allowed to react for 1 hour, and the temperature of the mixture was raised up to room temperature, and then stirred for 12 hours. An organic layer was separated from the mixture by using diethylether (10mlx3) and water, and then stirred for 30 minutes with magnesium sulfate. After filtration, the volatile materials were removed from the organic layer and then the product was purified through a chromatography packed with silica gel using hexane and methylchloride (2:1) as mobile phase. Then, 4.55g of white solid was obtained after removing the volatile components.

Yield: 90 %,¹H-NMR (CDCl₃) δ= 5.04 (s, 1H), 6.58~7.75 (m, 8H)

### Synthesis of (dichloro)(pentamethylcyclopentadienyl)((2-(4-trifluoromethyl)phenyl) phenoxy)tanium(IV)

1.21g (5.07mmol) of 2-(4-trifluoromethyphenyl)phenol was dissolved in 40mL of diethylether, followed by slowly dropping 2.4mL of n-butyllithium (1.6M solution in hexanes, Aldrich) at 0°C. After the reaction proceeds for 5 hours at room temperature, a trichloro (pentamethylcyclopentadienyl)titanium(IV)(1.64g, 5.5mmol) solution in 10 mL of diethylether was slowly dropped into the flask at - 78°C. Stirring for 5 hours at room temperature, followed by filtering and removing volatile materials, the recrystallization was conducted using a mixed solution of toluene/hexane at -35°C to obtained 2.09g of red solid component.

Yield: 84%, ¹H-NMR (C₆D₆) δ= 2.03(s, 15H), 6.95 ~ 7.85 (m, 8H)

### EXAMPLE 3

300 mL of n-heptane was added into a stainless steel reactor which was purged with nitrogen after sufficient drying and had a volume of 500 mL, and 0.5 mL of triisobutylaluminum (Aldrich) (200 mM n-heptane solution) was added thereto. The temperature of the reactor was then increased to 140°C, and, subsequently, 0.2 mL of (dichloro)(pentamethylcyclopentadienyl)(2-phenyl-4-fluorophenoxy) titanium(IV) (5 mM toluene solution) produced according to example 1, and 0.3 mL of triphenylmethylinium tetrakis(pentafluorophenyl)borate (99 %, Boulder Scientific) (5 mM toluene solution) were sequentially added thereto. Ethylene was then injected into the reactor until the pressure in the reactor was 30 atm and continuously fed for polymerization. 10 min after the reaction started, 10 mL of ethanol (including 10 vol% hydrochloric acid aqueous solution) were added to finish the polymerization. Then, product was stirred for 4 hours with 1500 mL of additional ethanol, and filtered. The resulting product was dried in a vacuum oven at 60 °C for 8 hours to produce 11.0g of polymer. The polymer had a melting point of 138.5°C, and a melt index of 0.026 g/10 min or less, and a weight average molecular weight of 184,300 and a molecular weight distribution of 2.12, which were determined through gel chromatography analysis.

### EXAMPLE 4

300 mL of n-heptane was added into a stainless steel reactor which was purged with nitrogen after sufficient drying and had a volume of 500 mL, and 0.5 mL of triisobutylaluminum (Aldrich) (200 mM n-heptane solution) was added thereto. The temperature of the reactor was then increased to 140°C, and, subsequently, 0.2 mL of (dichloro)(pentamethylcyclopentadienyl)((2-(4-trifluoromethyl) phenyl) phenoxy) titanium (IV) (5 mM toluene solution), produced according to example 2, and 0.3 mL of triphenylmethylinium tetrakis(pentafluorophenyl)borate (99 %, Boulder Scientific) (5 mM toluene solution) were sequentially added thereto. Ethylene was then injected into the reactor until the pressure in the reactor was 30 atm, and was continuously fed for polymerization. 10 min after the reaction started, 10 mL of ethanol (including 10 vol% hydrochloric acid aqueous solution) were added to finish the polymerization, agitation was conducted for 4 hours along with 1500 mL of additional ethanol, and products were filtered and separated. The resulting product was dried in a vacuum oven at 60 °C for 8 hours to produce 9.1g of polymer. The polymer had a melting point of 136.0°C and a melt index of 0.002 g/10 min or less, and a weight average molecular weight of 285,400 and a molecular weight distribution of 3.36, which were determined through gel chromatography analysis.

### EXAMPLE 5

15 mL of 1-octene were injected into a reactor which was the same as in example 3, and polymerization was then conducted through the same procedure as in example 3 except that 0.2 mL of (dichloro)(pentamethylcyclopentadienyl)(2-phenyl-4-fluorophenoxy)titanium(IV) (5 mM toluene solution) and 0.3 mL of triphenylmethylinium tetrakis(pentafluorophenyl)borate (Boulder Scientific) (5 mM toluene solution) were added after 0.5 mL of triisobutylaluminum triisobutylaluminum (200 mM n-heptane solution, Aldrich) was added. 10.7 g of dried polymer was obtained. The weight average molecular weight was 98,900 and a molecular weight distribution was 2.14, which were determined through gel chromatography analysis. The melt index was 1.0 g/10 min, the melting point of the polymer was 124.7°C, and the content of 1-octene was 5.3 wt%.

### COMPARATIVE EXAMPLE 1

Polymerization was conducted through the same procedure as in example 3 except that 0.2 mL of (trimethyl)(pentamethylcyclopentadienyl)titanium(IV) (97 %, Strem) (5 mM toluene solution), 0.24 mL of triisobutylaluminum (200 mM n-heptane solution) (Aldrich), and 0.25 mL of triphenylmethylinium tetrakis(pentafluorophenyl)borate (99 %, Boulder Scientific) (5 mM toluene solution) were used. The product was dried to produce 3.0 g of polymer. The polymer had a melting point of 132.0°C and a melt index of 0.16 g/10 min, and a weight average molecular weight of 150,000 and a molecular weight distribution of 5.47, which were determined through gel chromatography analysis.

### COMPARATIVE EXAMPLE 2

Polymerization was conducted through the same procedure as in example 5 except that 0.3 mL of rac-dimethylsilyl bis(20methylindenyl) zirconiumdichloride(Boulder Scientific)(5 mM toluene solution) as catalyst component, 1-octene- as co-monomer were used. 15.0 g of dried polymer was obtained. The melting point of the polymer was 123.2°C and the melt index was 110.0 g/10 min. The weight average molecular weight was 28,000 and a molecular weight distribution was 12.0, which were determined through gel chromatography analysis, and the content of 1-octene was 2.4 wt%.

## Claims

1. An arylphenoxy-based transition metal catalyst for producing ethylene homopolymer or copolymers of ethylene and α-olefins which is expressed by Formula 1,
which has stability for high temperature solution polymerization with temperature condition of 120 ~ 250°C, and includes a cyclopentadiene derivative and arylphenoxide as fixed ligands around a transition metal; wherein said arylphenoxide is substituted with at least one aryl derivative at the ortho position thereof and at least one halogen compound, and the ligands are not crosslinked to each other 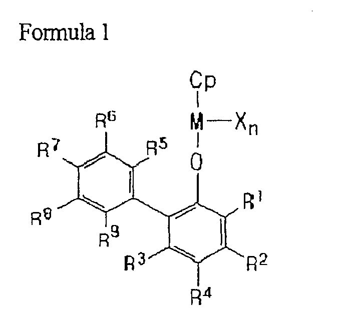 wherein M is a group 4 transition metal of a periodic table;
Cp is a cyclopentadienyl anion capable of forming an η⁵-bond along with the central metal, or a derivative thereof;
at least one of substituent R¹, R², R³, R⁴, R⁵, R⁶, R⁷, R⁸ and R⁹ of the arylphenoxide ligand is a halogen atom or a C1-C20 linear or nonlinear alkyl group substituted with at least one halogen atom, and the substituents of the arylphenoxide ligand other than the halogen-containing substituent are independently hydrogen atom, a C1-C20 linear or nonlinear alkyl group, a silyl group which contains the C1-C20 linear or nonlinear alkyl group, a C7-C30 arylalkyl group, an alkoxy group which contains the C1-C20 alkyl group, or a C3-C20 alkyl-substituted or C6-C20 aryl-substituted siloxy group, an amido group or a phosphido group which has the C1-C20 hydrocarbon group, or a C1-C20 alkyl-substituted mercapto or nitro group, optionally with the proviso that the substituent groups may be arbitrarily bonded to form rings;
X is selected from or is two or more independently selected from a group consisting of the halogen atom, the C1-C20 alkyl group which is not the Cp derivative, the C7-C30 arylalkyl group, an alkoxy group which contains the C1-C20 alkyl group, the C3-C20 alkyl-substituted siloxy group, and an amido group which has a C1-C20 hydrocarbon group; and
n is 1 or 2 depending on an oxidation value of the transition metal.

2. The arylphenoxy-based transition metal catalyst as set forth in claim 1, wherein M is selected from a group consisting of titanium, zirconium, and hafnium.

3. The arylphenoxy-based transition metal catalyst as set forth in claim 1, wherein Cp is the cyclopentadiene anion capable of forming the η⁵-bond along with the central metal or the derivative thereof, and is selected from a group consisting of cyclopentadienyl, methylcyclopentadienyl, dimethylcyclopentadienyl, tetramethylcyclopentadienyl, pentamethylcyclopentadienyl, butylcyclopentadienyl, sec-butylcyclopentadienyl, tert-butylmethylcyclopentadienyl, trimethylsilylcyclopentadienyl, indenyl, methylindenyl, dimethylindenyl, ethylindenyl, isopropylindenyl, fluorenyl, methylfluorenyl, dimethylfluorenyl, ethylfluorenyl, and isopropylfluorenyl.

4. The arylphenoxy-based transition metal catalyst as set forth in claim 1, wherein at least one of R¹, R², R³, R⁴, R⁵, R⁶, R⁷, R⁸ and R⁹ of the arylphenoxide ligand is the halogen compound and the others are independently selected from a group consisting of a hydrogen atom, a methyl group, an ethyl group, an isopropyl group, a tert-butyl group, an amyl group, a trimethylsilyl group, a tert-butyldimethylsilyl group, a triphenylsilyl group, a phenyl group, a naphthyl group, a biphenyl group, a 2-isopropylphenyl group, a 3,5-xylyl group, a 2,4,6-trimethylphenyl group, a benzyl group, a methoxy group, an ethoxy group, an isopropoxy group, a tert-butoxy group, a trimethylsiloxy group, a tert-butyldimethylsiloxy group, a triphenylsiloxy group, a trifluoromethyl group, a pentafluorophenyl group, a dimethylsiloxy group, a dimethylamino group, a diethylamino group, an ethylmercaptan group, an isopropylmercaptan group, and a nitro group.

5. The arylphenoxy-based transition metal catalyst as set forth in claim 1, wherein X of the arylphenoxide ligand is one or more selected from a group consisting of the halogen atom, a methyl group, an ethyl group, an isopropyl group, a tert-butyl group, an amyl group, a benzyl group, a methoxy group, an ethoxy group, an isopropoxy group, a tert-butoxy group, a trimethylsiloxy group, a tert-butyldimethylsiloxy group, a dimethylamino group, and a diethylamino group.

6. An arylphenoxy catalyst system for producing an ethylene homopolymer or a copolymer of ethylene and α-olefin, comprising:
a transition metal catalyst which has stability for high temperature solution polymerization with temperature condition of 120 - 250 °C, and includes a cyclopentadiene derivative and arylphenoxide as fixed ligands around a transition metal; wherein said arylphenoxide is substituted with at least one aryl derivative at the ortho position thereof and at least one halogen compound, and the ligands are not crosslinked to each other; and
an aluminoxane or boron compound cocatalyst,
wherein the transition metal catalyst being expressed by Formula 1: 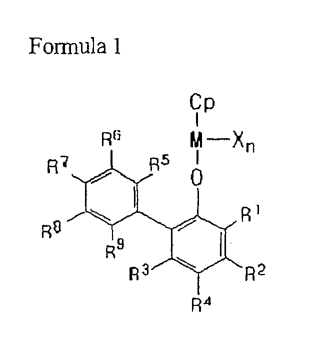
wherein M is a group 4 transition metal of a periodic table;
Cp is a cyclopentadienyl anion capable of forming an η⁵-bond along with the central metal, or a derivative thereof;
at least one of substituent R¹, R², R³, R⁴, R⁵, R⁶, R⁷, R⁸ and R⁹ of the arylphenoxide ligand is a halogen atom or a C1-C20 linear or nonlinear alkyl group substituted with at least one halogen atom, and the substituents of the arylphenoxide ligand other than are independently hydrogen atom, a C1-C20 linear or nonlinear alkyl group, a silyl group which contains the C1-C20 linear or nonlinear alkyl group, a C7-C30 arylalkyl group, an alkoxy group which contains the C1-C20 alkyl group, or a C3-C20 alkyl-substituted or C6-C20 aryl-substituted siloxy group, an amido group or a phosphido group which has the C1-C20 hydrocarbon group, or a C1-C20 alkyl-substituted mercapto or nitro group, optionally with the proviso that the substituent groups may be arbitrarily bonded to form rings;
X is selected from or is two or more independently selected from a group consisting of the halogen atom, the C1-C20 alkyl group which is not the Cp derivative, the C7-C30 arylalkyl group, an alkoxy group which contains the C1-C20 alkyl group, the C3-C20 alkyl-substituted siloxy group, and an amido group which has a C1-C20 hydrocarbon group; and
n is 1 or 2 depending on an oxidation value of the transition metal.

7. The arylphenoxy catalyst system as set forth in claim 6, wherein the aluminoxane cocatalyst is expressed by Formula 5 or 6, and a molar ratio of a central metal to aluminum is 1 : 50 - 1 : 5000:
Formula 5 (-Al(R⁹)-O-)m
Formula 6 (R⁹)₂Al-(-O(R⁹)-)ₚ-(R⁹)₂
wherein R⁹ is a C1-C4 alkyl group, and m and p are each an integer ranging from 5 to 20.

8. The arylphenoxy catalyst system as set forth in claim 6, wherein the boron compound cocatalyst is selected from a group consisting of N,N-dimethylanilinium tetrakis(pentafluorophenyl)borate, triphenylmethylinium tetrakis(pentafluorophenyl)borate, and tris(pentafluoro)borane.

9. The arylphenoxy catalyst system as set forth in claim 6, wherein the boron compound cocatalyst is additionally mixed with aluminoxane or organic alkyl aluminum so that a molar ratio of the central metal : a boron atom : an aluminum atom is 1 : 0.5 - 5 : 25 - 500.

10. The arylphenoxy catalyst system as set forth in claim 9, wherein the aluminoxane is selected from a group consisting of compounds expressed by Formula 5 or 6, and the organic alkyl aluminum is selected from a group consisting of compounds expressed by Formula 10:
Formula 5 (-Al(R⁹)-O-)ₘ
Formula 6 (R⁹)₂Al-(-O(R⁹)-)ₚ-(R⁹)₂
wherein R⁹ is a C1-C20 alkyl group, and preferably a methyl group or an isobutyl group, and m and p are each an integer ranging from 5 to 20,
Formula 10 (R¹³)ᵣAl(E)₃₋ᵣ
wherein R¹³ is a C1-C8 alkyl group, E is a hydrogen atom or a halogen atom, and r is an integer ranging from 1 to 3.

11. The arylphenoxy catalyst system as set forth in claim 10, wherein the organic alkyl aluminum is triethylaluminum or triisobutylaluminum.

12. A method of producing an ethylene homopolymer or a copolymer of ethylene and α-olefin using the arylphenoxy-based transition metal catalyst according to claim 1, wherein pressure in a reaction system of ethylene homopolymer or a copolymer of ethylene and α-olefin is 10 - 150 atm and a polymerization temperature is 120 - 250°C.

13. A method of producing a copolymer of ethylene and α-olefin using the arylphenoxy catalyst system according to claim 6, wherein a co-monomer which is used to conduct polymerization along with ethylene is one or more selected from a group consisting of 1-butene, 1-hexene, 1-octene, and 1-decene, and an ethylene content of the copolymer is 60 wt% or more.

## Patentansprüche

1. Arylphenoxy-basierter Übergangsmetallkatalysator zur Herstellung von Ethylen-Homopolymer oder Copolymeren von Ethylen und α-Olefinen, der durch Formel 1 ausgedrückt wird,
der die Stabilität für Hochtemperatur-Lösungspolymerisation bei einer Temperaturbedingung von 120 - 250 °C besitzt, und der ein Cyclopentadienderivat und Arylphenoxid als fixierte Liganden um ein Übergangsmetall beinhaltet; wobei das Arylphenoxid mit zumindest einem Arylderivat an der Orthoposition desselben und zumindest einer Halogenverbindung substituiert ist, und die Liganden nicht miteinander vernetzt sind: 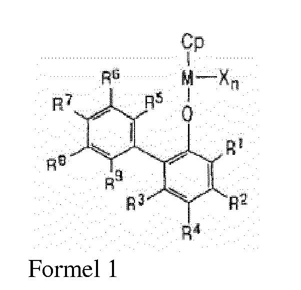 worin M für ein Übergangsmetall der 4. Gruppe eines Periodensystems steht;
Cp steht für ein Cyclopentadienylanion, das zur Bildung einer η⁵- Bindung zusammen mit dem zentralen Metall in der Lage ist, oder für ein Derivat desselben;
zumindest einer der Substituenten R¹, R², R³, R⁴, R⁵, R⁶, R⁷, R⁸ und R⁹ des Arylphenoxid-Liganden für ein Halogenatom oder eine lineare oder nicht lineare C1-C20-Alkylgruppe steht, die mit zumindest einem Halogenatom substituiert ist, und die Substituenten des Arylphenoxid-Liganden, der halogenhaltige Substituent ausgenommen, unabhängig voneinander stehen für Wasserstoffatom, eine lineare oder nicht lineare C1-C20-Alkylgruppe, eine Silylgruppe, die die lineare oder nicht lineare C1-C20-Alkylgruppe enthält, eine C7-C30-Arylalkylgruppe, eine Alkoxygruppe, die die C1-C20-Alkylgruppe enthält, oder eine C3-C20-Alkyl-substituierte oder C6-C20-Aryl-substituierte Siloxygruppe, eine Amidogruppe oder eine Phosphidogruppe, die die C1-C20-Kohlenwasserstoffgruppe aufweist, oder eine C1-C20-Alkyl-substituierte Mercapto- oder Nitrogruppe, gegebenenfalls mit der Maßgabe, dass die Substituentengruppen unter Bildung von Ringen beliebig gebunden werden können;
X gewählt ist aus oder steht für zwei oder mehr, die unabhängig voneinander gewählt sind aus einer Gruppe, bestehend aus dem Halogenatom, der C1-C20-Alkylgruppe, die nicht das Cp-Derivat ist, der C7-C30-Arylalkylgruppe, einer Alkoxygruppe, die die C1-C20-Alkylgruppe enthält, der C3-C20-Alkyl-substituierten Siloxygruppe und einer Amidogruppe, die eine C1-C20-Kohlenwasserstoffgruppe aufweist; und
n für 1 oder 2 steht in Abhängigkeit von einem Oxidationswert des Übergangsmetalls.

2. Arylphenoxy-basierter Übergangsmetallkatalysator nach Anspruch 1, wobei M aus einer Gruppe gewählt ist, die aus Titan, Zirconium und Hafnium besteht.

3. Arylphenoxy-basierter Übergangsmetallkatalysator nach Anspruch 1, wobei Cp steht für das Cyclopentadienanion, das zur Bildung der η⁵-Bindung zusammen mit dem zentralen Metall in der Lage ist, oder für das Derivat desselben, und gewählt ist aus einer Gruppe, bestehend aus Cyclopentadienyl, Methylcyclopentadienyl, Dimethylcyclopentadienyl, Tetramethylcyclopentadienyl, Pentamethylcyclopentadienyl, Butylcyclopentadienyl, sek-Butylcyclopentadienyl, tert-Butylmethylcyclopentadienyl, Trimethylsilylcyclopentadienyl, Indenyl, Methylindenyl, Dimethylindenyl, Ethylindenyl, Isopropylindenyl, Fluorenyl, Methylfluorenyl, Dimethylfluorenyl, Ethylfluorenyl und Isopropylfluorenyl.

4. Arylphenoxy-basierter Übergangsmetallkatalysator nach Anspruch 1, wobei zumindest einer von R¹, R², R³, R⁴, R⁵, R⁶, R⁷, R⁸ und R⁹ des Arylphenoxid-Liganden für die Halogenverbindung steht und die anderen unabhängig voneinander aus einer Gruppe gewählt sind, die besteht aus einem Wasserstoffatom, einer Methylgruppe, einer Ethylgruppe, einer Isopropylgruppe, einer tert-Butylgruppe, einer Amylgruppe, einer Trimethylsilylgruppe, einer tert-Butyldimethylsilylgruppe, einer Triphenylsilylgruppe, einer Phenylgruppe, einer Naphthylgruppe, einer Biphenylgruppe, einer 2-Isopropylphenylgruppe, einer 3,5-Xylylgruppe, einer 2,4,6-Trimethylphenylgruppe, einer Benzylgruppe, einer Methoxygruppe, einer Ethoxygruppe, einer Isopropoxygruppe, einer tert-Butoxygruppe, einer Trimethylsiloxygruppe, einer tert-Butyldimethylsiloxygruppe, einer Triphenylsiloxygruppe, einer Trifluormethylgruppe, einer Pentafluorphenylgruppe, einer Dimethylsiloxygruppe, einer Dimethylaminogruppe, einer Diethylaminogruppe, einer Ethylmercaptangruppe, einer Isopropylmercaptangruppe und einer Nitrogruppe.

5. Arylphenoxy-basierter Übergangsmetallkatalysator nach Anspruch 1, wobei das X des Arylphenoxid-Liganden steht für eines oder mehrere, gewählt aus einer Gruppe, die besteht aus dem Halogenatom, einer Methylgruppe, einer Ethylgruppe, einer Isopropylgruppe, einer tert-Butylgruppe, einer Amylgruppe, einer Benzylgruppe, einer Methoxygruppe, einer Ethoxygruppe, einer Isopropoxygruppe, einer tert-Butoxygruppe, einer Trimethylsiloxygruppe, einer tert-Butyldimethylsiloxygruppe, einer Dimethylaminogruppe und einer Diethylaminogruppe.

6. Arylphenoxykatalysatorsystem zur Herstellung eines Ethylen-Homopolymers oder eines Copolymers von Ethylen und α-Olefin, umfassend:
einen Übergangsmetallkatalysator, der die Stabilität für Hochtemperatur-Lösungspolymerisation bei einer Temperaturbedingung von 120 - 250 °C besitzt, und der ein Cyclopentadienderivat und Arylphenoxid als fixierte Liganden um ein Übergangsmetall beinhaltet; wobei das Arylphenoxid mit zumindest einem Arylderivat an der Orthoposition desselben und zumindest einer Halogenverbindung substituiert ist, und die Liganden nicht miteinander vernetzt sind; und
einen Aluminoxan- oder Borverbindungs-Cokatalysator,
wobei der Übergangsmetallkatalysator durch Formel 1 ausgedrückt wird: 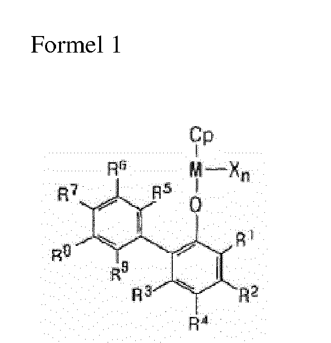
worin M für ein Übergangsmetall der 4. Gruppe eines Periodensystems steht;
Cp steht für ein Cyclopentadienylanion, das zur Bildung einer η⁵- Bindung zusammen mit dem zentralen Metall in der Lage ist, oder für ein Derivat desselben;
zumindest einer der Substituenten R¹, R², R³, R⁴, R⁵, R⁶, R⁷, R⁸ und R⁹ des Arylphenoxid-Liganden für ein Halogenatom oder eine lineare oder nicht lineare C1-C20-Alkylgruppe steht, die mit zumindest einem Halogenatom substituiert ist, und die Substituenten des Arylphenoxid-Liganden, der halogenhaltige Substituent ausgenommen, unabhängig voneinander stehen für Wasserstoffatom, eine lineare oder nicht lineare C1-C20-Alkylgruppe, eine Silylgruppe, die die lineare oder nicht lineare C1-C20-Alkylgruppe enthält, eine C7-C30-Arylalkylgruppe, eine Alkoxygruppe, die die C1-C20-Alkylgruppe enthält, oder eine C3-C20-Alkyl-substituierte oder C6-C20-Aryl-substituierte Siloxygruppe, eine Amidogruppe oder eine Phosphidogruppe, die die C1-C20-Kohlenwasserstoffgruppe aufweist, oder eine C1-C20-Alkyl-substituierte Mercapto- oder Nitrogruppe, gegebenenfalls mit der Maßgabe, dass die Substituentengruppen unter Bildung von Ringen beliebig gebunden werden können;
X gewählt ist aus oder steht für zwei oder mehr, die unabhängig voneinander gewählt sind aus einer Gruppe, bestehend aus dem Halogenatom, der C1-C20-Alkylgruppe, die nicht das Cp-Derivat ist, der C7-C30-Arylalkylgruppe, einer Alkoxygruppe, die die C1-C20-Alkylgruppe enthält, der C3-C20-Alkyl-substituierten Siloxygruppe und einer Amidogruppe, die eine C1-C20-Kohlenwasserstoffgruppe aufweist; und
n für 1 oder 2 steht in Abhängigkeit von einem Oxidationswert des Übergangsmetalls.

7. Arylphenoxykatalysatorsystem nach Anspruch 6, wobei der Aluminoxan-Cokatalysator durch Formel 5 oder 6 ausgedrückt wird, und ein Molverhältnis eines zentralen Metalls zu Aluminium 1 : 50 - 1 : 5000 beträgt:
Formel 5 (-Al(R⁹)-O-)ₘ
Formel 6 (R⁹)₂Al-(-O(R⁹)-)ₚ-(R⁹)ₘ
worin R⁹ für eine C1-C4-Alkylgruppe steht, und m und p jeweils für eine ganze Zahl im Bereich von 5 bis 20 stehen.

8. Arylphenoxykatalysatorsystem nach Anspruch 6, wobei der Borverbindungs-Cokatalysator aus einer Gruppe gewählt ist, die aus N,N-Dimethylaniliniumtetrakis(pentafluorphenyl)borat, Triphenylmethylinium-tetrakis(pentafluorphenyl)borat und Tris(pentafluor)boran besteht.

9. Arylphenoxykatalysatorsystem nach Anspruch 6, wobei der Borverbindungs-Cokatalysator zusätzlich mit Aluminoxan oder organischem Alkylaluminium vermischt ist, so dass ein Molverhältnis des zentralen Metalls : einem Boratom : einem Aluminiumatom 1 : 0,5 - 5 : 25 - 500 beträgt.

10. Arylphenoxykatalysatorsystem nach Anspruch 9, wobei das Aluminoxan gewählt ist aus einer Gruppe, bestehend aus Verbindungen, die durch Formel 5 oder 6 ausgedrückt werden, und das organische Alkylaluminium gewählt ist aus einer Gruppe, bestehend aus Verbindungen, die durch Formel 10 ausgedrückt werden:
Formel 5 (-Al(R⁹)-O-)ₘ
Formel 6 (R⁹)₂Al-(-O(R⁹)-)ₚ-(R⁹)₂
worin R⁹ für eine C1-C20-Alkylgruppe, und vorzugsweise für eine Methylgruppe oder eine Isobutylgruppe, steht, und m und p jeweils für eine ganze Zahl im Bereich von 5 bis 20 stehen,
Formel 10 (R¹³)ᵣAl(E)₃₋ᵣ
worin R¹³ für eine C1-C8-Alkylgruppe steht, E für ein Wasserstoffatom oder ein Halogenatom steht, und r für eine ganze Zahl im Bereich von 1 bis 3 steht.

11. Arylphenoxykatalysatorsystem nach Anspruch 10, wobei das organische Alkylaluminium Triethylaluminium oder Triisobutylaluminium ist.

12. Verfahren zur Herstellung eines Ethylen-Homopolymers oder eines Copolymers von Ethylen und α-Olefin unter Verwendung des Arylphenoxy-basierten Übergangsmetallkatalysators gemäß Anspruch 1, wobei Druck in einem Reaktionssystem von Ethylen-Homopolymer oder einem Copolymer von Ethylen und α-Olefin 10 - 150 atm beträgt und eine Polymerisationstemperatur 120 - 250°C beträgt.

13. Verfahren zur Herstellung eines Copolymers von Ethylen und α-Olefin unter Verwendung des Arylphenoxykatalysatorsystems gemäß Anspruch 6, wobei ein Co-Monomer, das zur Durchführung von Polymerisation zusammen mit Ethylen eingesetzt wird, besteht in einem oder mehreren, gewählt aus einer Gruppe, die sich aus 1-Buten, 1-Hexen, 1-Octen und 1-Decen zusammensetzt, und ein Ethylengehalt des Copolymers 60 Gew.-% oder mehr beträgt.

## Revendications

1. Catalyseur à métal de transition à base d'arylphénoxy pour produire un homopolymère d'éthylène ou des copolymères d'éthylène et des α-oléfines qui est exprimé par la formule 1,
qui a une stabilité pour la polymérisation en solution à haute température dans des conditions de température de 120 à 250 °C, et comprend un dérivé de cyclopentadiène et un arylphénoxyde en tant que ligands fixes autour d'un métal de transition ; ledit arylphénoxyde étant substitué par au moins un dérivé d'aryle à la position ortho de celui-ci et au moins un composé halogéné, et les ligands ne sont pas réticulés les uns aux autres : 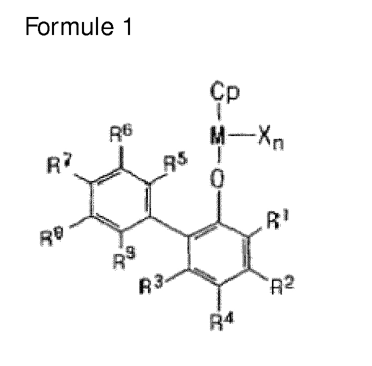 dans laquelle M est un métal de transition du groupe 4 de la table périodique ;
Cp est un anion cyclopentadiényle capable de former une liaison η⁵ avec le métal central, ou un dérivé de celui-ci ;
au moins un des substituants R¹, R², R³, R⁴, R⁵, R⁶, R⁷, R⁸ et R⁹ du ligand arylphénoxyde est un atome d'halogène ou un groupe alkyle en C1-C20 linéaire ou non linéaire substitué par au moins un atome d'halogène, et les substituants du ligand arylphénoxyde autres que le substituant contenant un halogène sont indépendamment un atome d'hydrogène, un groupe alkyle en C1-C20 linéaire ou non linéaire, un groupe silyle qui contient le groupe alkyle en C1-C20 linéaire ou non linéaire, un groupe arylalkyle en C7-C30, un groupe alcoxy qui contient le groupe alkyle en C1-C20, ou un groupe siloxy substitué par alkyle en C3-C20 ou aryle en C6-C20, un groupe amido ou un groupe phosphido qui a le groupe hydrocarboné en C1-C20, ou un groupe mercapto ou nitro substitué par alkyle en C1-C20, facultativement à condition que les groupes substituants puissent arbitrairement liés pour former des cycles ;
X est choisi parmi ou est deux ou plus indépendamment choisis dans un groupe constitué de l'atome d'halogène, le groupe alkyle en C1-C20 qui n'est pas le dérivé Cp, le groupe arylalkyle en C7-C30, un groupe alcoxy qui contient le groupe alkyle en C1-C20, le groupe siloxy substitué par alkyle en C3-C20, et un groupe amido qui a un groupe hydrocarboné en C1-C20 ; et
n est 1 ou 2 suivant une valeur d'oxydation du métal de transition.

2. Catalyseur à métal de transition à base d'arylphénoxy tel que décrit dans la revendication 1, dans lequel M est choisi dans un groupe constitué des titane, zirconium, et hafnium.

3. Catalyseur à métal de transition à base d'arylphénoxy tel que décrit dans la revendication 1, dans lequel Cp est l'anion cyclopentadiène capable de former la liaison η⁵ avec le métal central ou le dérivé de celui-ci, et est choisi dans un groupe constitué de cyclopentadiényle, méthylcyclopentadiényle,
diméthylcyclopentadiényle, tétraméthylcyclopentadiényle, pentaméthylcyclopentadiényle, butylcyclopentadiényle, sec-butylcyclopentadiényle, tert- butylméthylcyclopentadiényle, triméthylsilylcyclopentadiényle, indényle, méthylindényle, diméthylindényle, éthylindényle, isopropylindényle, fluorényle, méthylfluorényle, diméthylfluorényle, éthylfluorényle, et isopropylfluorényle.

4. Catalyseur à métal de transition à base d'arylphénoxy tel que décrit dans la revendication 1, dans lequel au moins l'un de R¹, R², R³, R⁴, R⁵, R⁶, R⁷, R⁸ et R⁹ du ligand arylphénoxyde est le composé halogéné et les autres sont indépendamment choisis dans un groupe constitué d'un atome d'hydrogène, un groupe méthyle, un groupe éthyle, un groupe isopropyle, un groupe tert-butyle, un groupe amyle, un groupe triméthylsilyle, un groupe tert-butyldiméthylsilyle, un groupe triphénylsilyle, un groupe phényle, un groupe naphtyle, un groupe biphényle, un groupe 2-isopropylphényle, un groupe 3,5-xylyle, un groupe 2,4,6- triméthylphényle, un groupe benzyle, un groupe méthoxy, un groupe éthoxy, un groupe isopropoxy, un groupe tert-butoxy, un groupe triméthylsiloxy, un groupe tert-butyldiméthylsiloxy, un groupe triphénylsiloxy, un groupe trifluorométhyle, un groupe pentafluorophényle, un groupe diméthylsiloxy, un groupe diméthylamino, un groupe diéthylamino, un groupe éthylmercaptan, un groupe isopropylmercaptan, et un groupe nitro.

5. Catalyseur à métal de transition à base d'arylphénoxy tel que décrit dans la revendication 1, dans lequel X du ligand arylphénoxyde est un ou plusieurs choisis dans un groupe constitué de l'atome d'halogène, un groupe méthyle, un groupe éthyle, un groupe isopropyle, un groupe tert-butyle, un groupe amyle, un groupe benzyle, un groupe méthoxy, un groupe éthoxy, un groupe isopropoxy, un groupe tert-butoxy, un groupe triméthylsiloxy, un groupe tert-butyldiméthylsiloxy, un groupe diméthylamino, et un groupe diéthylamino.

6. Système de catalyseur à arylphénoxy pour produire un homopolymère d'éthylène ou un copolymère d'éthylène et de α-oléfine, comprenant :
un catalyseur à métal de transition qui a une stabilité pour la polymérisation en solution à haute température dans des conditions de température de 120 à 250 °C, et comprend un dérivé de cyclopentadiène et un arylphénoxyde en tant que ligands fixes autour d'un métal de transition ; ledit arylphénoxyde étant substitué par au moins un dérivé d'aryle à la position ortho de celui-ci et au moins un composé halogéné, et les ligands ne sont pas réticulés les uns aux autres ; et
un aluminoxane ou cocatalyseur de composé de bore,
dans lequel le catalyseur à métal de transition étant exprimé par la formule 1 : 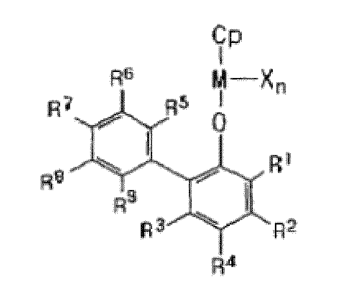
dans laquelle M est un métal de transition du groupe 4 de la table périodique ;
Cp est un anion cyclopentadiényle capable de former une liaison η⁵ avec le métal central, ou un dérivé de celui-ci ;
au moins un des substituants R¹, R², R³, R⁴, R⁵, R⁶, R⁷, R⁸ et R⁹ du ligand arylphénoxyde est un atome d'halogène ou un groupe alkyle en C1-C20 linéaire ou non linéaire substitué par au moins un atome d'halogène, et les substituants du ligand arylphénoxyde autres que le substituant contenant un halogène sont indépendamment un atome d'hydrogène, un groupe alkyle en C1-C20 linéaire ou non linéaire, un groupe silyle qui contient le groupe alkyle en C1-C20 linéaire ou non linéaire, un groupe arylalkyle en C7-C30, un groupe alcoxy qui contient le groupe alkyle en C1-C20, ou un groupe siloxy substitué par alkyle en C3-C20 ou aryle en C6-C20, un groupe amido ou un groupe phosphido qui a le groupe hydrocarboné en C1-C20, ou un groupe mercapto ou nitro substitué par alkyle en C1-C20, facultativement à condition que les groupes substituants puissent arbitrairement liés pour former des cycles ;
X est choisi parmi ou est deux ou plus indépendamment choisis dans un groupe constitué de l'atome d'halogène, le groupe alkyle en C1-C20 qui n'est pas le dérivé Cp, le groupe arylalkyle en C7-C30, un groupe alcoxy qui contient le groupe alkyle en C1-C20, le groupe siloxy substitué par alkyle en C3-C20, et un groupe amido qui a un groupe hydrocarboné en C1-C20 ; et
n est 1 ou 2 suivant une valeur d'oxydation du métal de transition.

7. Système de catalyseur à arylphénoxy tel que décrit dans la revendication 6, dans lequel le cocatalyseur d'aluminoxane est exprimé par la formule 5 ou 6, et un rapport molaire d'un métal central à l'aluminium est de 1 : 50 à 1 : 5000 :
Formule 5 (-Al(R⁹)-O-)ₘ
Formule 6 (R⁹₎₂Al-(-O(R⁹)-)ₚ-(R⁹)₂
dans laquelle R⁹ est un groupe alkyle en C1-C4, et m et p sont chacun un entier dans la plage de 5 à 20.

8. Système de catalyseur à arylphénoxy tel que décrit dans la revendication 6, dans lequel le cocatalyseur de composé de bore est choisi dans un groupe constitué de tétrakis(pentafluorophényl)borate de N,N-diméthylanilinium, tétrakis(pentafluorophényl)borate de triphénylméthylinium, et tris(pentafluoro)borane.

9. Système de catalyseur à arylphénoxy tel que décrit dans la revendication 6, dans lequel le cocatalyseur de composé de bore est en outre mélangé avec de l'aluminoxane ou un alkylaluminium organique de sorte qu'un rapport molaire de métal central : atome de bore : atome d'aluminium soit de 1 : 0,5 - 5 : 25 - 500.

10. Système de catalyseur à arylphénoxy tel que décrit dans la revendication 9, dans lequel l'aluminoxane est choisi dans un groupe constitué de composés exprimés par la formule 5 ou 6, et l'alkylaluminium organique est choisi dans un groupe constitué de composés exprimés par la formule 10 :
Formule 5 (-Al(R⁹)-O-)ₘ
Formule 6 (R⁹)₂Al-(-O(R⁹)-)ₚ-(R⁹)₂
dans laquelle R⁹ est un groupe alkyle en C1-C20, et de préférence un groupe méthyle ou un groupe isobutyle, et m et p sont chacun un entier dans la plage de 5 à 20,
Formule 10 (R³)ᵣAl(E)₃₋ᵣ
dans laquelle R¹³ est un groupe alkyle en C1-C8, E est un atome d'hydrogène ou un atome d'halogène, et r est un entier dans la plage de 1 à 3.

11. Système de catalyseur à arylphénoxy tel que décrit dans la revendication 10, dans lequel l'alkylaluminium organique est triéthylaluminium ou triisobutylaluminium.

12. Procédé de production d'un homopolymère d'éthylène ou d'un copolymère d'éthylène et de α-oléfine utilisant le catalyseur à métal de transition à base d'arylphénoxy selon la revendication 1, dans lequel la pression dans un système de réaction d'homopolymère d'éthylène ou un copolymère d'éthylène et de α-oléfine est de 10 à 150 atm et la température de polymérisation est de 120 à 250 °C.

13. Procédé de production d'un copolymère d'éthylène et de α-oléfine utilisant le système de catalyseur à arylphénoxy selon la revendication 6, dans lequel un comonomère qui est utilisé pour conduire la polymérisation avec de l'éthylène est un ou plusieurs choisis dans un groupe constitué de 1-butène, 1-hexène, 1-octène, et 1-décène, et la teneur en éthylène du copolymère est de 60 % en poids ou plus.
